# EUROPEAN PATENT SPECIFICATION

(11) **EP 2 648 372 B1**
(45) Date of publication and mention of the grant of the patent: **09.03.2016**
(21) Application number: 11845612.8
(22) Date of filing: 05.12.2011
(51) Int. Cl.: H04W 76/00

(54) **METHOD AND APPARATUS FOR TRANSMITTING DATA**
VERFAHREN UND VORRICHTUNG ZUR ÜBERTRAGUNG VON DATEN
PROCÉDÉ ET APPAREIL DE TRANSMISSION DE DONNÉES

(30) Priority: 03.12.2010 CN 201010579552
(43) Date of publication of application: 09.10.2013
(73) Proprietor: Huawei Technologies Co., Ltd., Longgang District Shenzhen, Guangdong 518129 (CN)
(72) Inventor: ZHAO, Yang, Shenzhen Guangdong 518129 (CN); FANG, Ming, Shenzhen Guangdong 518129 (CN)
(74) Representative: Isarpatent
(86) International application number: PCT/CN2011/083466
(87) International publication number: WO 2012/072050

(56) References cited:
- WO-A1-2005/101752
- WO-A1-2005/109728
- WO-A1-2009/102109
- CN-A- 1 379 600
- CN-A- 1 939 002
- CN-A- 101 578 784
- US-A1- 2008 225 783
- US-A1- 2008 307 284
- US-B1- 6 452 940
- "3rd Generation Partnership Project;Technical Specification Group GSM/EDGE Radio Access Network;RLC/MAC Protocol;Multiple TBF Concept(Release 5)", 3GPP DRAFT; GP-022275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Los Angeles, USA; 20020821, 21 August 2002 (2002-08-21), XP050006120, [retrieved on 2002-08-21]

## Description

### TECHNICAL FIELD

The present invention relates to the field of mobile communication technologies, and in particular, to a data transmission method and apparatus in a wireless communication system.

### BACKGROUND

In a GSM (Global System for Mobile communications, global system for mobile communications) system, a wireless interface uses a manner of combining TDMA (Time Division Multiple Access, time division multiple access) and FDMA (frequency division multiple access, frequency division multiple access). A frequency band assigned by the system is divided into at least two frequencies of 200 kHz. Users communicate by using different frequencies. Furthermore, each frequency is divided into 8 timeslots that are approximately 0.577 ms long in time, and the period of each timeslot is 8 x 0.577 ≈ 4.6 ms. Each timeslot in the GSM may bear a voice TCH (Traffic Channel, traffic channel). Therefore, one frequency may provide at most 8 full-rate voice services. 8 consecutive timeslots are called a TDMA frame, and the information transmitted in each timeslot is called a "burst" (burst).

A GPRS (General Packet Radio Service, general packet radio service) system is evolved and extended from the GSM, and uses the same burst structure, modulation scheme, and TDMA frame structure as the GSM. In the GPRS, each timeslot may bear one PDCH (Packet Data Channel, data traffic channel), but different from the TCH, one PDCH may be shared by at least two terminals, and at least two PDCHs may also be assigned to one terminal.

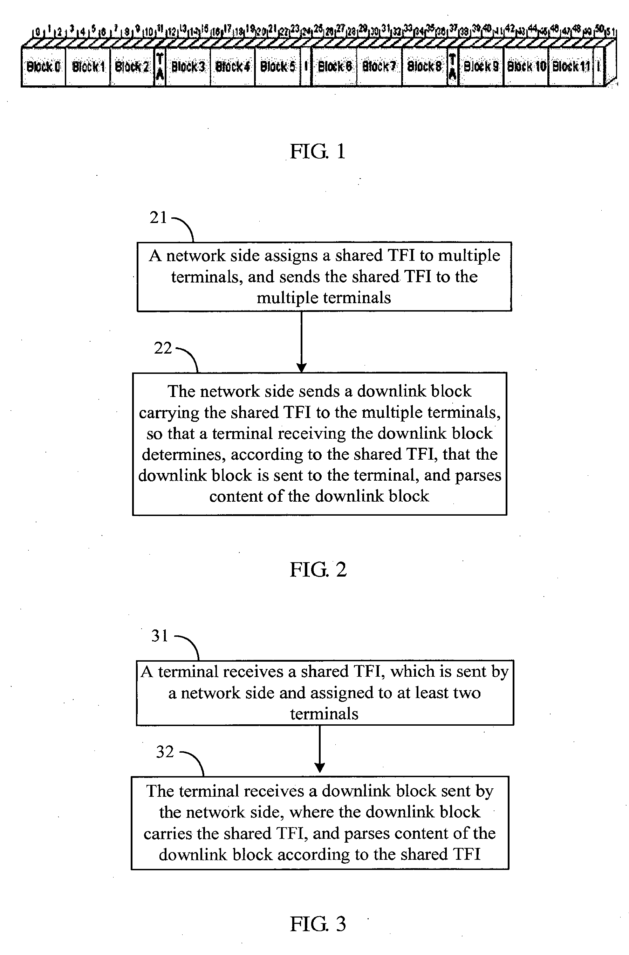

The concept of a data block is introduced in the GPRS. Bursts with the same timeslot number on 4 consecutive TDMA frames are called a data block. The data block is a basic unit of data transmission performed in the GPRS. A division manner of data blocks is shown in FIG. 1. One PDCH is repeated in a period of 52 TDMA frames. Each period is called a 52 multiframe, which is divided into 12 data blocks (Block 0 to Block 11) used to send data and higher-layer signaling. In addition, two frames are used to send timing advance information, and two frames are not used to send information but used to measure a neighboring cell by a terminal.

All data transmission in the GPRS is completed by establishing a TBF (Temporary Block Flow, temporary block flow), and the TBF is identified by a TFI (Temporary Flow Identity, temporary block flow indication) field in a data block.

A method for downlink data transmission in the GPRS in the prior art is as follows: A network side sends a Packet Downlink Assignment (downlink data block assignment) message carrying the frequency and timeslot information of a PDCH and a TFI assigned to a terminal. After the terminal receives the Packet Downlink Assignment message, the terminal establishes a downlink TBF with the network side.

After the downlink TBF is established successfully, the terminal monitors a downlink PDCH according to the frequency and timeslot information of the PDCH that is carried in the Packet Downlink Assignment message, and parses a block header of a data block in the downlink PDCH. When a TFI in the block header of the data block is the same as the TFI assigned to the terminal, the terminal considers that the data block is sent to itself for use, and parses specific content of the data block.

The inventor finds that in the method for downlink data transmission in the GPRS in the prior art, the terminal exclusively uses the TFI assigned to itself, and that each terminal corresponds to one TFI. However, TFI resources of the GPRS system are limited, and when a large number of terminals access the system and the total number of the terminals is greater than the total number of the TFI resources of the GPRS system, no TFI is assigned to some terminals.

WO 2005/101752 A1 relates to a method for distributing shared information contents to terminals. The method includes obtaining radio blocks to be transmitted through a network cell, labelling the radio blocks with a first radio link identifier, and communicating the first radio link identifier to a plurality of terminals in the network cell.

"3GPP; Technical Specification Group GSM/EDGE Radio Access Network; RLC/MAC; Multiple TBF Concept (Rel.5)", 3GPP DRAFT; GP-022275, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Los Angeles, USA; August 21, 2002, discloses multiple TBF procedures and multiple TBF messages. Specially, this document discloses that adding TFI value for each downlink TBF or a USF for each uplink TBF to existing RLC/MAC control message.

WO 2005/109728 A1 relates to a method for distributing identical information content to a plurality of mobile stations located in a geographical area of a mobile network. A sequence of data blocks carrying information related to a BSS of a mobile network by an outer coding unit. The BSS manages retransmissions of nacked data blocks taking into account of positive acknowledgements related to the outer code decoding, by disabling retransmission of nacked data blocks of a positively acknowledged sequence.

### SUMMARY

Embodiments of the present invention provide a data transmission method and apparatus to save TFI resources of a GPRS system.

A data transmission method includes:
assigning, by a network side, a shared temporary block flow indication, TFI, to at least two terminals, and sending the shared TFI through a downlink assignment message or a broadcast message to the at least two terminals, wherein the downlink assignment message or the broadcast message further comprises identity information of a downlink block belonging to each terminal; and
sending, by the network side, a downlink block to the at least two terminals, where a block header of the downlink block carries the shared TFI wherein a terminal receiving the downlink block parses content of the downlink block according to identity information of the downlink block sent by the network side, identity information of a downlink block belonging to the terminal, and the shared TFI carried in the block header of the downlink block.

A data transmission apparatus arranged on a network side includes:
a temporary block flow indication, TFI, assigning module, configured to assign a shared TFI through a downlink assignment message or a broadcast message to at least two terminals, and send the shared TFI to the at least two terminals, wherein the downlink assignment message or the broadcast message further comprises identity information of a downlink block belonging to each terminal; and
a downlink block transmitting module, configured to send a downlink block to the at least two terminals, where a block header of the downlink block carries the shared TFI wherein a terminal receiving the downlink block parses content of the downlink block according to identity information of the downlink block sent by the network side, identity information of a downlink block belonging to the terminal, and the shared TFI carried in the block header of the downlink block.

A data processing method includes:
receiving a downlink assignment message or a broadcast message sent by a network side, where the downlink assignment message or the broadcast message includes an assigned shared temporary block flow indication, TFI, which is assigned to at least two terminals and identity information of a downlink block belonging to the terminal; and
receiving a downlink block sent by the network side, where the downlink block carries the shared TFI, and parsing content of the downlink block according to identity information of the downlink block sent by the network side, identity information of a downlink block belonging to the terminal, and the shared TFI carried in the downlink block.

A terminal includes:
a first receiving module, configured to receive a downlink assignment message or a broadcast message sent by a network side, where the downlink assignment message or the broadcast message includes an assigned shared temporary block flow indication, TFI, which is assigned to at least two terminals and identity information of a downlink block belonging to the terminal; and
a data processing module, configured to receive a downlink block sent by the network side, where the downlink block carries the shared TFI, and parse content of the downlink block according to identity information of the downlink block sent by the network side, identity information of a downlink block belonging to the terminal, and the shared TFI carried in the downlink block.

As seen from the technical solutions provided in the embodiments of the present invention, in the embodiments of the present invention, a shared TFI is assigned to at least two terminals, so that TFI resources in a wireless communication system are saved, thereby saving transmission resources of a downlink channel in the wireless communication system.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description merely show some embodiments of the present invention, and persons of ordinary skill in the art may still derive other drawings from the accompanying drawings without creative efforts.
FIG. 1 is a schematic diagram of a division manner of data blocks in a 52 multiframe of a GPRS system in the prior art;
FIG. 2 is a processing flowchart of a data transmission method on a network side according to Embodiment 1 of the present invention;
FIG. 3 is a processing flowchart of a data processing method on a terminal side according to Embodiment 2 of the present invention;
FIG. 4 is a processing flowchart of a downlink data transmission method in a wireless communication system according to Embodiment 3 of the present invention;
FIG. 5 is a specific structural diagram of a data transmission apparatus on a network side according to an embodiment of the present invention; and
FIG. 6 is a specific structural diagram of a terminal according to an embodiment of the present invention.

### DESCRIPTION OF EMBODIMENTS

To make the objectives, technical solutions, and advantages of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

For the convenience of understanding the embodiments of the present invention, the following further describes the present invention with reference to accompanying drawings and several specific embodiments, and such embodiments are not intended to limit the embodiments of the present invention.

### Embodiment 1

FIG. 2 shows a processing flowchart of a data transmission method on a network side according to this embodiment, where the method includes the following processing steps.

Step 21: A network side assigns a shared TFI to at least two terminals, and sends the shared TFI to the at least two terminals.

The network side determines, according to at least one of current usage of a downlink resource, user subscription information, and terminal capability information, whether to assign the shared TFI to the at least two terminals, and if yes, the network side sends a downlink assignment message or a broadcast message carrying the shared TFI assigned to the at least two terminals and the frequency and timeslot information of a downlink channel, where the broadcast message may include a system message.

In actual applications, the at least two terminals may be grouped. The network side needs to store a group identity belonging to each terminal, and the terminal side needs to store a group identity belonging to the terminal. Then the downlink assignment message or the broadcast message may further carry a group identity corresponding to the shared TFI; or, a specified field or a new field in a block header of a downlink block sent by the network side to the terminal carries the group identity corresponding to the shared TFI.

In actual applications, the network side may further respectively assign all downlink blocks in a certain period to terminals, and the network side needs to store a block number of a downlink block belonging to each terminal. Then the downlink assignment message or the broadcast message may further carry block number information of the downlink block belonging to each terminal, and the terminal side needs to store the block number of the downlink block belonging to the terminal.

Step 22: The network side sends a downlink block carrying the shared TFI to the at least two terminals, so that a terminal receiving the downlink block parses content of the downlink block according to the shared TFI. The downlink block may be a downlink data block or a control block, where the control block may carry signaling.

The terminal monitors the downlink channel according to the frequency and timeslot information of the downlink channel that is carried in the downlink assignment message or the broadcast message. When monitoring and receiving a downlink block sent by the network side, where the downlink block carries the shared TFI, the terminal parses the block header of the downlink block. When a TFI carried in the block header of the downlink block is the same as the shared TFI assigned to the terminal, the terminal considers that the data block is sent to itself, and parses specific content of the downlink block.

After the at least two terminals are grouped, and the downlink assignment message or the broadcast message may further include the group identity corresponding to the shared TFI; or, the specified field or new field in the block header of the downlink block carries the group identity corresponding to the shared TFI, the terminal determines, according to consistency between the group identity corresponding to the shared TFI and the group identity belonging to the terminal, and consistency between the TFI carried in the block header of the downlink block and the shared TFI assigned to the terminal, that the downlink block is sent to itself, and parses specific content of the downlink block.

After the network side respectively assigns all downlink blocks in a certain period to terminals, and the downlink assignment message or the broadcast message may further include the block number information of the downlink block belonging to each terminal, the terminal determines, according to consistency between the block number information of the downlink block and the block number information of the downlink block belonging to the terminal, and consistency between the TFI carried in the block header of the downlink block and the shared TFI assigned to the terminal, that the downlink block is sent to itself, and parses specific content of the downlink block.

This embodiment implements assignment of a shared TFI to at least two terminals. Therefore, a network side can send a shared downlink block to the at least two terminals at the same time, and there is no need to separately send a downlink data block or a control block to each terminal repeatedly, so that TFI resources and transmission resources of a downlink channel in a GPRS system are saved.

### Embodiment 2

FIG. 3 shows a processing flowchart of a data processing method on a terminal side according to this embodiment, where the method includes the following processing steps.

Step 31: A terminal receives a downlink assignment message or a broadcast message sent by a network side, where the downlink assignment message or the broadcast message includes an assigned shared TFI. The broadcast message may include a system message.

In actual applications, the at least two terminals may be grouped, and the terminal side needs to store a group identity belonging to the terminal. Then the downlink assignment message or the broadcast message may further include a group identity corresponding to the shared TFI; or, a specified field or a new field in a block header of a downlink block sent by the network side to the terminal may further carry the group identity corresponding to the shared TFI.

In actual applications, the network side may further respectively assign all downlink blocks in a certain period to terminals. Then the downlink assignment message or the broadcast message may further carry identity information of a downlink block belonging to each terminal, and the terminal side needs to store the identity of the downlink block belonging to the terminal. The identity information of the downlink block may be block number information of the downlink block.

Step 32: The terminal receives a downlink block sent by the network side, where the downlink block carries the shared TFI, and parses content of the downlink block according to the shared TFI. The downlink block may be a downlink data block or a control block, where the control block may carry signaling.

The terminal monitors the downlink channel according to the frequency and timeslot information of the downlink channel that is carried in the downlink assignment message or the broadcast message. When monitoring and receiving the downlink block sent by the network side, where the downlink block carries the shared TFI, the terminal parses the block header of the downlink block. When a TFI carried in the block header of the downlink block is the same as the shared TFI assigned to the terminal, the terminal considers that the data block is sent to itself, and parses specific content of the downlink block.

After the at least two terminals are grouped, and the downlink assignment message or the broadcast message may further include the group identity corresponding to the shared TFI; or, the specified field or new field in the block header of the downlink block carries the group identity corresponding to the shared TFI, the terminal determines, according to consistency between the group identity corresponding to the shared TFI and the group identity belonging to the terminal, and consistency between the TFI carried in the block header of the downlink block and the shared TFI assigned to the terminal, that the downlink block is sent to itself, and parses specific content of the downlink block.

After the network side respectively assigns all downlink blocks in a certain period to terminals, and the downlink assignment message or the broadcast message may further include block number information of the downlink block belonging to each terminal, the terminal determines, according to consistency between the block number information of the downlink block and the block number information of the downlink block belonging to the terminal, and consistency between the TFI carried in the block header of the downlink block and the shared TFI assigned to the terminal, that the downlink block is sent to itself, and parses specific content of the downlink block.

In actual applications, the network side may further respectively assign all downlink blocks in a certain period to terminals, and the terminal receives an uplink assignment message sent by the network side, where the message carries an uplink USF (link state flag) assigned to the terminal. Then the terminal receives the downlink block sent by the network side, where the downlink block carries the shared TFI and the USF, and determines, according to consistency between the USF carried in the downlink block and the USF belonging to the terminal, and the shared TFI carried in the downlink block, that the downlink block is sent to itself, and parses content of the downlink block.

With this embodiment, the terminal can parse, according to the shared TIF assigned by the network side, the shared downlink block sent by the network side to the at least two terminals at the same time, and the network side does not need to separately send a downlink data block or a control block to each terminal repeatedly, so that TFI resources and transmission resources of a downlink channel in a GPRS system are saved.

### Embodiment 3

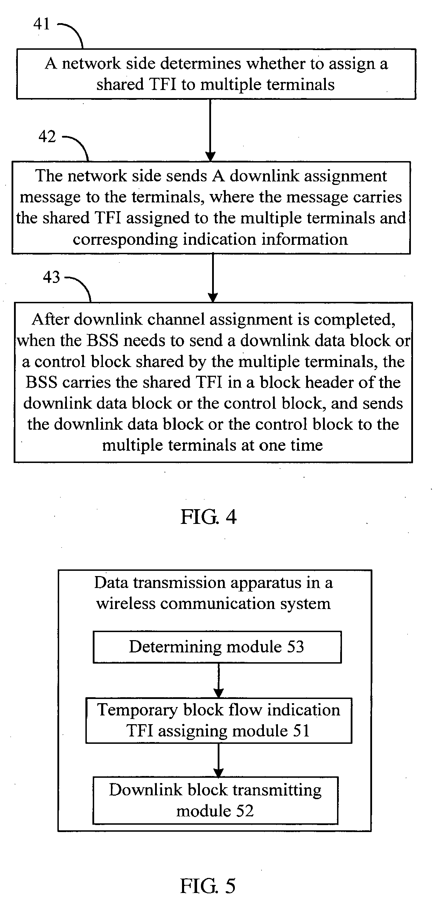

FIG. 4 shows a processing flowchart of a downlink data transmission method in a wireless communication system according to this embodiment, where the method includes the following processing steps.

Step 41: A network side determines whether to assign a shared TFI to at least two terminals.

A BSS (Base Station Subsystem, base station subsystem) on the network side may determine, according to information such as current usage of a downlink resource, user subscription information, and a terminal capability, whether to assign the shared TFI to the at least two terminals.

For example, when downlink resource of the BSS are insufficient and the number of accessed terminals is large, the BSS determines that it is necessary to assign the shared TFI to the at least two terminals.

When user subscription information and/or terminal capability information of the at least two terminals has the same attribute, for example, both are M2M terminals of the same meter reading service, the BSS determines that it is necessary to assign the shared TFI to the at least two terminals.

When the BSS determines that it is necessary to assign the shared TFI to the at least two terminals, step 42 is executed.

Step 42: The network side sends a downlink assignment message to the terminals, where the message carries the shared TFI assigned to the at least two terminals and corresponding indication information.

New indication information is added to the downlink assignment message sent by the BSS to the terminals in the embodiment of the present invention to indicate whether to assign the shared TFI to the terminals.

The following describes the embodiment of the present invention by using an example in which the downlink assignment message is a Packet Downlink ASSIGNMENT message.

New indication information is added to the Packet Downlink ASSIGNMENT message, and the format of information elements in the Packet Downlink ASSIGNMENT message with the added indication information is as follows:

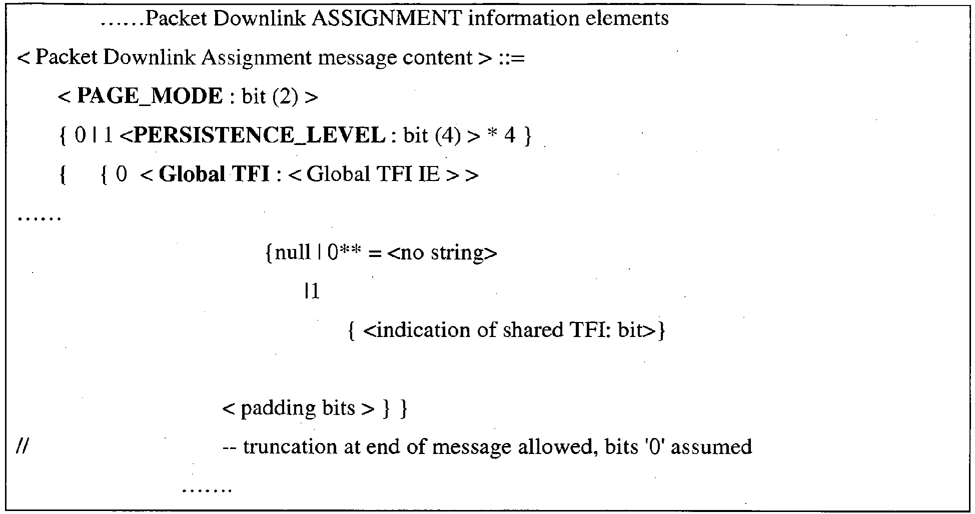

The value 0 of the indication of shared TFI field in the Packet Downlink ASSIGNMENT message indicates that the <Global TFI> assigned to the terminal is an exclusive TFI; and the value 1 of the indication of shared TFI field indicates that the <Global TFI> assigned to the terminal is a shared TFI.

When the BSS needs to assign the shared TFI to the at least two terminals, the value of the indication of shared TFI field in the Packet Downlink ASSIGNMENT message may be set to 1 and sent to the terminals. Then the BSS may assign the frequency and timeslot information of a same PDCH to the at least two terminals by using messages such as the Packet Downlink Assignment message.

After the at least two terminals receive the Packet Downlink Assignment message, if the message carries the new indication information and the value of the indication of shared TFI field is 1, it is confirmed that a TFI carried in the Packet Downlink Assignment message is the shared TFI assigned by the BSS to the at least two terminals.

Step 43: After downlink channel assignment is completed, when the BSS needs to send a downlink data block or a control block (carrying signaling) shared by the at least two terminals, the BSS carries the shared TFI in a block header of the downlink data block or the control block, and sends the downlink data block or the control block to the at least two terminals at one time.

The terminal determines, according to the TFI carried in the received data block or control block, whether the TFI is a TFI assigned by the network side to itself, and if yes, the terminal parses specific content of the data block or control block.

When an MCS-9 coding scheme is used, the format of the block header of the data block carrying the shared TFI is as follows:

| Bit | | | | | | | | |
|---|---|---|---|---|---|---|---|---|
| 8 | 7 | 6 | 5 | 4 | 3 | 2 | 1 | Octet |
| TFI (shared) | RRBP | | ES/P | | USF | | | 1 |
| BSN1 | | PR | | TFI (shared) | | | | 2 |
| BSN1 | | | | | | | | 3 |
| BSN2 | | | | | | | BSN1 | 4 |
| CPS | | | | | BSN2 | | | 5 |

The terminal monitors a downlink PDCH according to the frequency and timeslot information of the PDCH that is carried in the Packet Downlink Assignment message, and parses the block header of the data block or control block in the downlink PDCH. When a TFI carried in the block header of the data block or control block is the same as the TFI assigned to the terminal, the terminal considers that the data block is sent to itself, and parses specific content of the data block or control block.

In actual applications, the at least two terminals sharing the same TFI may be further grouped. Each group of terminals is identified by a Group ID. The Group ID may be defined according to the terminal capability, subscription attribute, and so on. For example, there are two groups of M2M terminals, and their meter reading services are respectively used to measure enterprise power consumption and household power consumption. Therefore, the data reported by the terminals and the time of reporting that are required by an electric power company are different. However, for terminals of the same enterprise power consumption or household power consumption, the requirements are the same. Therefore, a corresponding downlink data or control message is shared. In this case, the Group ID may be used to identify the two groups of M2M terminals.

After the at least two terminals are grouped, a specified field or a new field in the coding format of the data block may carry specified group identity information. When the MCS-9 coding scheme is used, the Group ID may be carried by RRBP and ES/P fields in the format of the block header of the data block. The format of the block header of the data block in which the RRBP and ES/P fields carry the Group ID is as follows:

| Bit | | | | | | | | |
|---|---|---|---|---|---|---|---|---|
| 8 | 7 | 6 | 5 | 4 | 3 | 2 | 1 | Octet |
| TFI (shared) | Group ID | | | GA | USF | | | 1 |
| BSN1 | | PR | TFI (shared) | | | | | 2 |
| BSN1 | | | | | | | | 3 |
| BSN2 | | | | | | | BSN1 | 4 |
| CPS | | | | | | BSN2 | | 5 |

The GA indicates whether group information is valid:
bit
0 Group ID is not valid
1 Group ID is valid

The Group ID is used to indicate to which group of terminals a current downlink data block or a control block is sent.

3 bits may be used in the Group ID to represent at most 8 groups through the RRBP and ES/P fields.

Thereby, the terminals belonging to at least two groups can share the same TFI, thereby further saving downlink scheduling resources. When the GA displays that the group identity is invalid, a delivered downlink data block or control block is shared by all terminals sharing the TFI, or otherwise, is shared by the terminals belonging to the group. There are at most 8 groups because the group identity is limited by the 3 bits. Of course, the present invention may also extend other fields to extend the value range of the group identity.

When the MCS-9 coding scheme is used, the GA information may be indicated by a PR field in the format of the block header of the data block. At present, the value of the PR field is as follows:
Power Reduction (PR) field

| Power Reduction (PR) field | |
|---|---|
| Bit 87 | Power Reduction |
| 00 | 0 dB (included) to 3 dB (excluded) less than BCCH level - P0 |
| 01 | 3 dB (included) to 7 dB (excluded) less than BCCH level - P0 |
| 10 | 7 dB (included) to 10 dB (included) less than BCCH level - P0 |
| 11 | Not usable |

Because the 11 field is not used, the 11 field may be used to indicate that the Group ID is valid at this time:

| Bit | | | | | | | | |
|---|---|---|---|---|---|---|---|---|
| 8 | 7 | 6 | 5 | 4 | 3 | 2 | 1 | Octet |
| | | | | | | | | |
| TFI (shared) | Group ID | | | | USF | | | 1 |
| BSN1 | | | PR=11 | TFI (shared) | | | | 2 |
| BSN1 | | | | | | | | 3 |
| BSN2 | | | | | | | BSN1 | 4 |
| CPS | | | | | BSN2 | | | 5 |

Through the PR field, the Group ID may be extended to represent at most 16 groups by using 4 bits.

A new field may be added to the block header of the data block, and is dedicated for indicating Group ID information. The format of the block header of the data block carrying the Group ID through a new field is as follows:

| Bit | | | | | | | | |
|---|---|---|---|---|---|---|---|---|
| 8 | 7 | 6 | 5 | 4 | 3 | 2 | 1 | Octet |
| TFI | RRBP | | ES/P | | USF | | | 1 |
| BSN1 | | PR | | TFI | | | | 2 |
| BSN1 | | | | | | | | 3 |
| BSN2 | | | | | | | BSN1 | 4 |
| CPS | | | | | BSN2 | | | 5 |
| Group ID | | | | | | | GA | 6 |

Then when the BSS needs to send the downlink data block or the control block shared by the at least two terminals, the BSS carries the shared TFI and specified Group ID in the downlink data block or the control block, and sends the downlink data block or the control block to the at least two terminals through the downlink PDCH.

The terminal monitors the downlink PDCH according to the frequency and timeslot information of the PDCH that is carried in the Packet Downlink Assignment message, and parses the block header of the data block or control block in the downlink PDCH. When a Group ID carried in the block header of the data block or control block is the same as a Group ID of the terminal, and the data block or control block carries the shared TFI, the terminal considers that the data block or control block is sent to itself, and parses specific content of the data block or control block.

There may be at least two shared TFIs assigned to the terminal. For example, when the terminal belongs to at least two groups, at least two shared TFIs may be assigned to the terminal. The format of the information elements in the Packet Downlink Assignment message carrying the at least two shared TFIs assigned to the terminal is as follows:

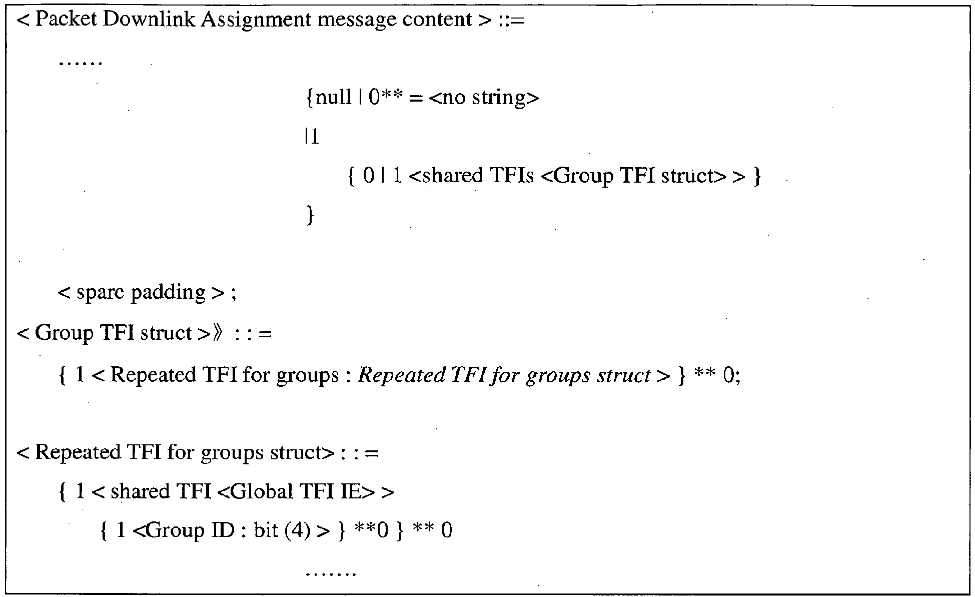

The above method effectively avoids a waste of transmission resources because the network side sends the same data to different terminals for many times, but this method does not allow the terminal to receive shared data and exclusive data at the same time. Therefore, the network side may further assign a shared TFI and an exclusive TFI to the terminal at the same time. The format of the information elements in the Packet Downlink Assignment message carrying the TFIs including the shared TFI and exclusive TFI that are assigned to the terminal is as follows:

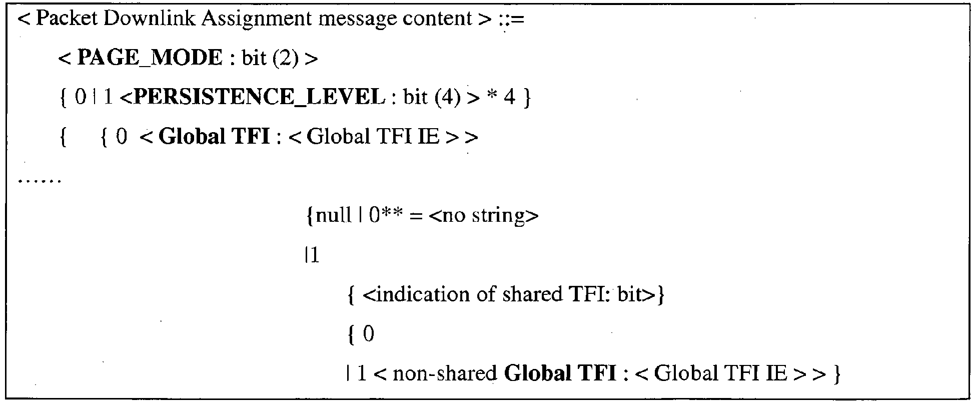

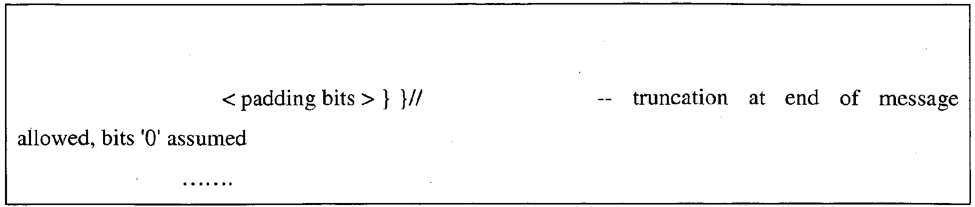

The value 0 of the indication of shared TFI field in the message indicates that the <Global TFI> assigned to the terminal is an exclusive TFI; and the value 1 of the indication of shared TFI field in the message indicates that the <Global TFI> assigned to the terminal is a shared TFI. When the indication of shared TFI field is 1, the network side may further choose to use a non-shared global TFI field to reassign an exclusive TFI to the terminal. When some services require that some downlink information should be shared information and that some downlink information should be exclusive information, the network side may assign a shared TFI and an exclusive TFI to the terminal in the downlink assignment message at the same time. Thereby, when there is shared information to be delivered, the downlink data block or the control block carries a shared TFI identity; when there is exclusive information to be delivered, the downlink data block or the control block carries an exclusive TFI identity. Because both the two TFIs are assigned to the terminal, the terminal can determine, no matter which TFI is carried in the downlink data block or the control block received by the terminal, whether the downlink data block or the control block belongs to itself, and therefore parse content of the downlink data block or the control block.

In the method, after the network side delivers the shared data, the terminal cannot respond. However, for some data/signaling requiring a response, the network side wishes that the terminal can respond. Therefore, when performing downlink assignment, the network side may further assign a temporary number to the terminals sharing the TFI as shown below:

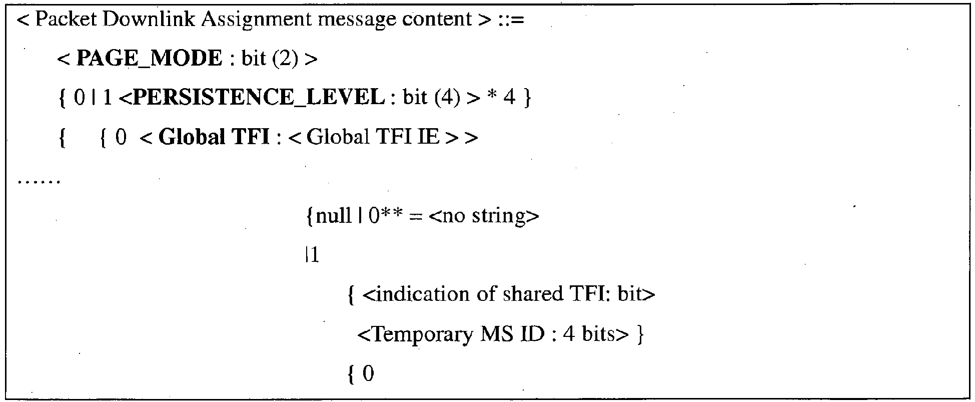

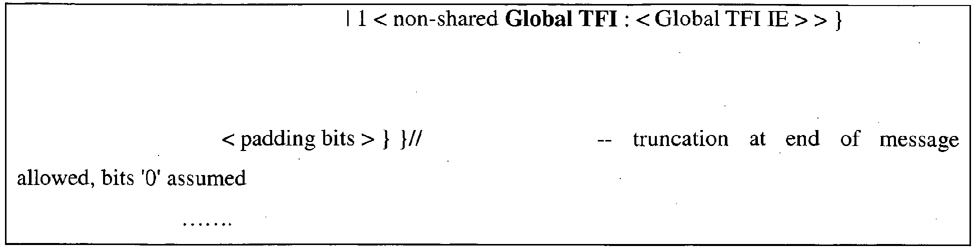

When downlink information is sent, the RRBP field specifies a corresponding reserved block for the terminal to make a response. When the network side delivers shared information, if a temporary number of the receiving terminal is 1, a response is made on the reserved block specified by the RRBP; if the temporary number of the receiving terminal is 2, a response is made on a block after the reserved block specified by the RRBP. For example, two terminals share a downlink TFI, and the network side specifies, in the downlink assignment message, that a temporary number of one terminal is 0001 and that a temporary number of the other terminal is 0010. In this case, when the RRBP field in the delivered shared downlink block is valid, the terminal with the number 0001 responds on the corresponding reserved block, and the terminal with the number 0002 responds on the block after the reserved block. The response manner is also applicable to Embodiment 4, Embodiment 5, and Embodiment 6 of the present invention.

This embodiment implements assignment of a shared TFI to at least two terminals, so that a network side can schedule the at least two terminals at the same time to receive a shared downlink data block or control block, thereby saving TFI resources of a GPRS system. Meanwhile, the network side of the GPRS system may further send, through the downlink data block or the control block carrying the shared TFI, a downlink data/control message shared by the at least two terminals to the at least two terminals at the same time, and there is no need to separately send a downlink data block or a control block to each terminal repeatedly, so that transmission resources of a downlink channel in the GPRS system are saved.

A more flexible manner for sharing TFI resources may be implemented by grouping at least two terminals.

### Embodiment 4

A BSS on a network side may further reserve a TFI value (such as 31) dedicated for TFI sharing. The reserved TFI value may be preset or may be dynamically changed.

The reserved TFI value may be delivered to a terminal through a broadcast message, where the broadcast message may be: a system message (such as an SI2quater message), a paging message, and so on. For example, in Rest Octets of the SI2quater message, a new indication is used to carry the reserved TFI value.

The format of an SI2quater message carrying the reserved TFI value according to this embodiment is as follows:

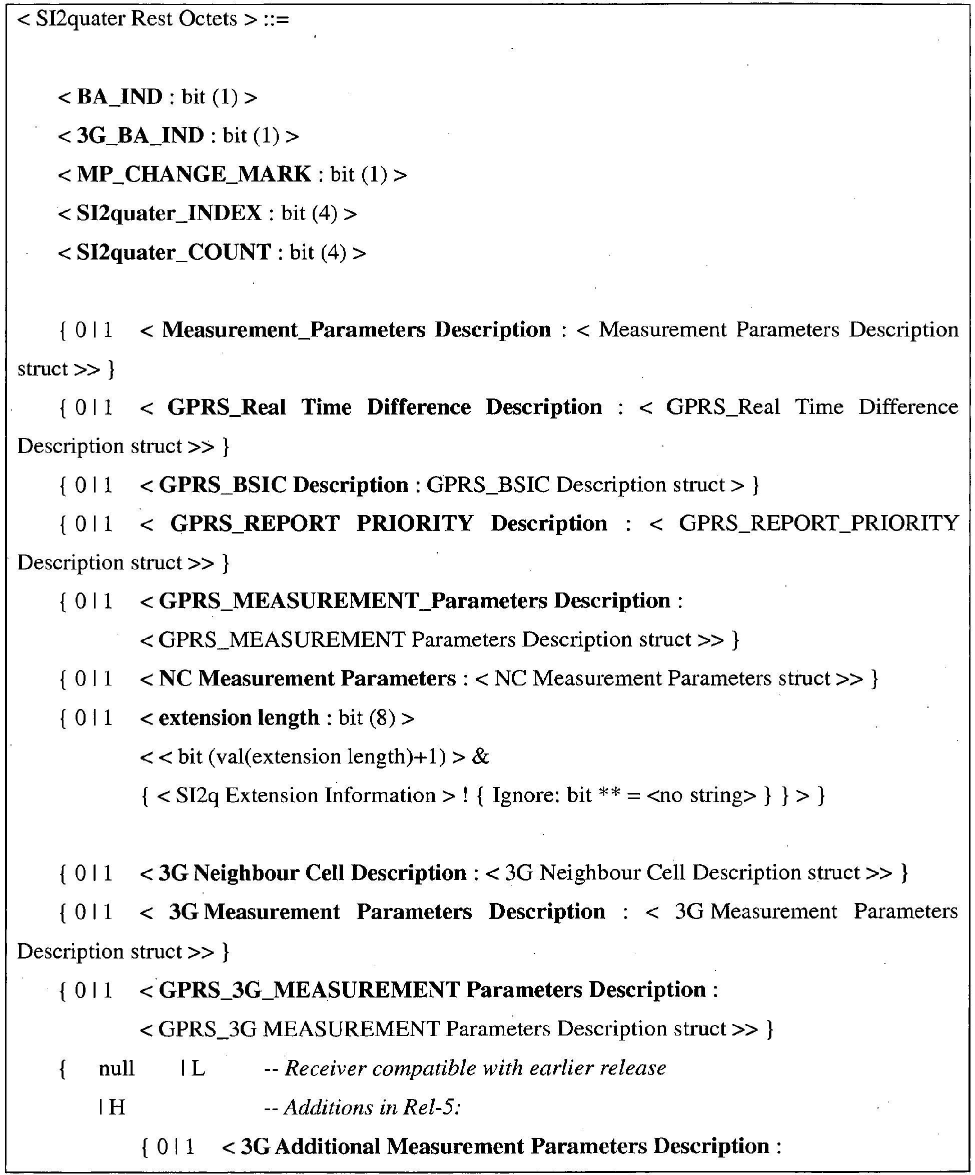

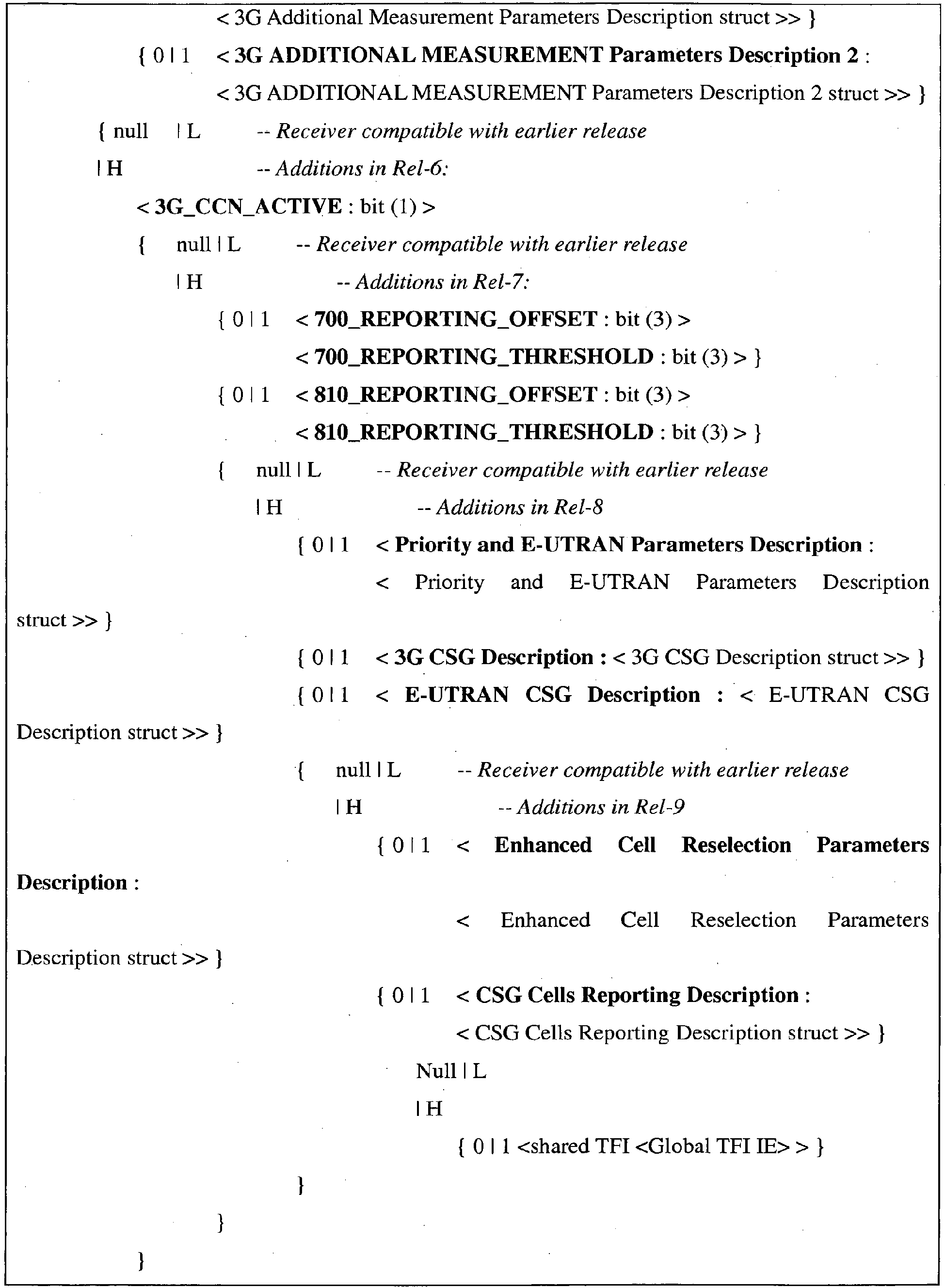

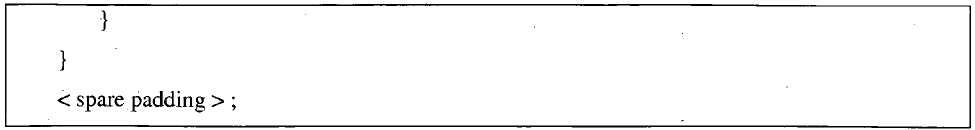

Of course, if an access network knows group information of a terminal, the access network may also assign the same TFI to a terminal belonging to a different group. The SI2quater message may be further modified as follows:

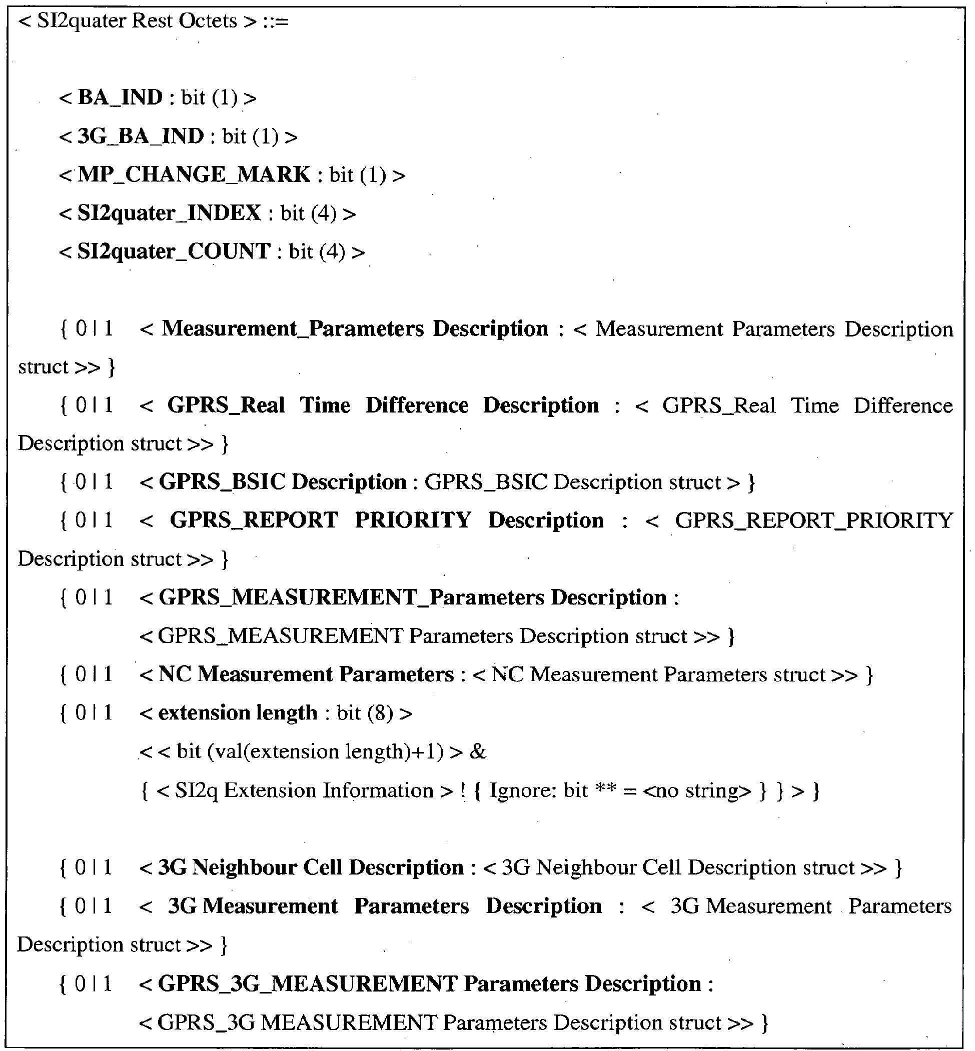

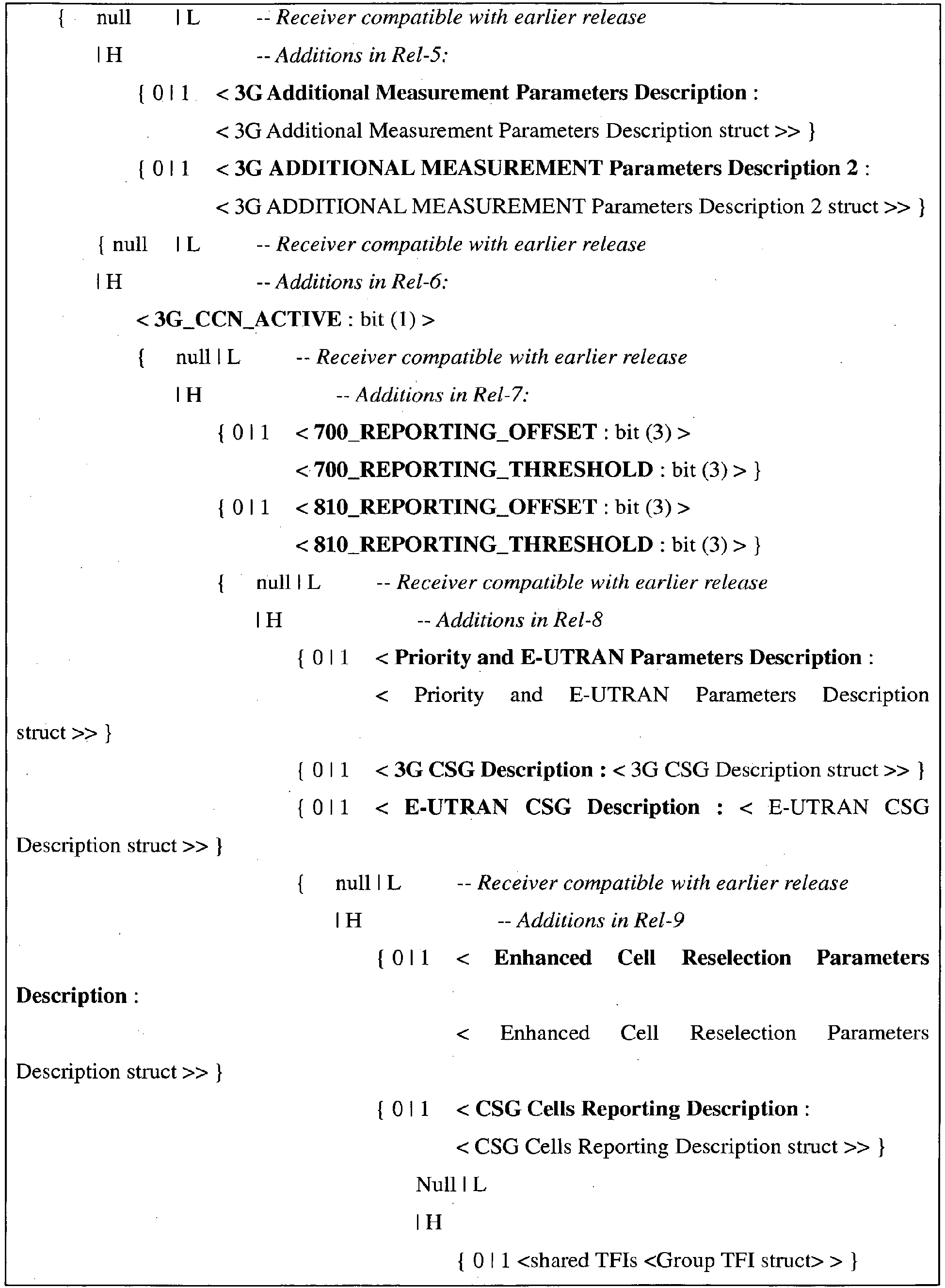

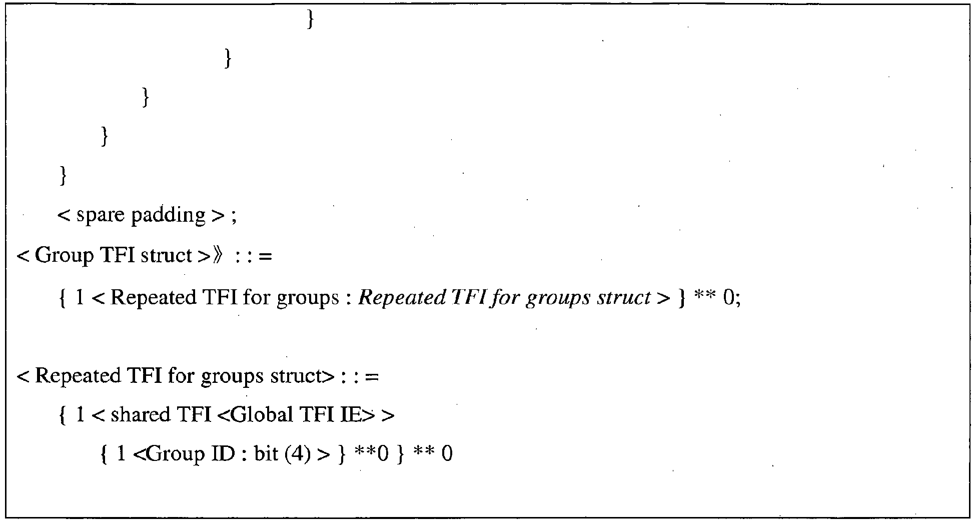

The BSS performs a normal downlink assignment procedure. A Packet Downlink Assignment message does not display an indication about whether a currently assigned TFI is shared. Instead, the TFI is set to the reserved TFI (that is, the value delivered in the broadcast message) to indicate that the TFI is a shared TFI. For example, when the reserved TFI value is 31, the BSS assigns the value 31 of the TFI to a terminal in the downlink assignment message, and the terminal may know that the TFI is a shared TFI.

Then, when the BSS needs to send a downlink data block or a control block shared by the at least two terminals, the BSS carries the reserved TFI in a block header of the downlink data block or the control block, and broadcasts the downlink data block or the control block to the at least two terminals through a downlink PDCH.

The terminal monitors the downlink PDCH according to the frequency and timeslot information of the PDCH that is carried in the Packet Downlink Assignment message, and parses the block header of the data block or control block in the downlink PDCH. When a TFI carried in the block header of the data block or control block is the same as the reserved TFI, the terminal considers that the data block or control block is sent to itself, and parses specific content of the data block or control block.

This embodiment implements assignment of a shared reserved TFI to at least two terminals, so that a network side can schedule the at least two terminals at the same time to receive shared downlink information, thereby saving TFI resources of a GPRS system. Meanwhile, the network side of the GPRS system may further send, through a downlink data block or a control block carrying the shared TFI, a downlink data/control message shared by the at least two terminals to the at least two terminals at the same time, and there is no need to separately send a downlink data block or a control block to each terminal repeatedly, so that transmission resources of a downlink channel in the GPRS system are saved.

### Embodiment 5

Embodiments 3 and 4 cannot solve the problem that a large number of TFI resources are still occupied by sending of non-shared information when a large number of terminals share a same PDCH. This embodiment puts forward a method for sharing a TFI on a time division basis. To be specific, all terminals share the same TFI value, but the same TFI value belongs to a 52 multiframe in a unit of a data block, that is, a TFI value may belong to different terminals in 12 data blocks in the 52 multiframe, and may belong to at most 12 terminals. Thereby, the quantity of combinations between TFI values and data block numbers may reach at most 12 x 32 = 384 in a 52 multiframe, that is, at most 384 terminals may be multiplexed on a PDCH.

A BSS on a network side needs to send information of a data block, among data blocks B0-B11, of each terminal to the each terminal. There may be multiple manners for expressing the information of the data block of the terminal.

For example, a same bit is used to number each data block in a period of a data frame and each terminal among the at least two terminals, and the data blocks and terminals having the same numbers are mapped.

An example is used for description as follows.

### 1) Expressed by a 12-bit bitmap

As shown in the following table, the network side specifies a radio block number to be monitored by the terminal in a downlink assignment message. Because a 52 multiframe has 12 blocks, a block corresponding to a bit set to 1 is the data block of the terminal.

| B11 | B10 | B9 | B8 | B7 | B6 | B5 | B4 | B3 | B2 | B1 | B0 |
|---|---|---|---|---|---|---|---|---|---|---|---|
| 1 | | | | 1 | | | | 1 | | 1 | |

### 2) Expressed by a block number

4 bits may be used in the downlink assignment message to number the data blocks and terminals, and the data blocks and terminals having the same numbers are mapped.
<Assigned Blocks struct> : : =
   { 1 | <Block Nub : bit 4 > } ** 0

For another example, a set number is used to perform a modulo operation on each data block in a period of a data frame, and data blocks corresponding to different values obtained after the modulo operation are assigned to different terminals respectively.

For example, if the value of a data block number mod 2 is 0, a corresponding data block is assigned to terminal 1, or if the value is 1, the corresponding data block is assigned to terminal 2. The modulus is not limited, and may be 2, 3, 4, and so on. Meanwhile, the method is also applicable to a frame number.

In this embodiment and Embodiments 3 and 4, the BSS on the network side may further directly indicate, in a Packet Downlink Assignment message, the validity period of a shared TFI for the terminal. For example, a start block number and an end block number are added to the message to indicate that the TFI is valid for the terminal in the period and that the shared TFI is invalid for the terminal after the end block number is exceeded.

The BSS on the network side sends a downlink assignment message carrying the above information to the terminal.

Then, when the BSS needs to send a downlink data block or a control block shared by the at least two terminals, the BSS carries the shared TFI in a block header of the downlink data block or the control block, and broadcasts the downlink data block or the control block to the at least two terminals through a downlink PDCH.

The terminal monitors the downlink PDCH according to the frequency and timeslot information of the PDCH that is carried in the Packet Downlink Assignment message, and parses the block header of the data block or control block in the downlink PDCH. When a block number of the data block or control block is the same as a block number of a data block or control block belonging to the terminal, and the block header of the data block or control block carries the shared TFI, the terminal considers that the data block or control block is sent to itself, and parses specific content of the data block or control block.

It should be noted that the above method does not limit that radio blocks assigned to different terminals must be different. If information shared by two or more terminals needs to be sent, radio blocks assigned by the network side to the terminals may overlap. In addition, a shared data/control message is sent in the overlapping part, and the data/control message is sent in a non-overlapping part to a particular terminal.

Of course, the network side may also use the following display method to distinguish between shared and non-shared radio blocks:
<Assigned Blocks struct> : : =
   { 0 | 1 < shared blocks struct > }
   { 0 | 1 < non-shared blocks struct > }
< shared blocks struct > : : =
   { 1 | <Block Nub : bit 4 > } ** 0
< non-shared blocks struct > : : =
   { 1 | <Block Nub : bit 4 > } ** 0

In actual applications, the embodiment of the present invention does not limit that only one TFI can be assigned to a terminal, and any one or at least two among 384 combinations (TFI value, data block number) may be assigned to a terminal, for example, (TFI=1, B0) and (TFI=2, B2) may be assigned to terminal 1 at the same time. In addition, the embodiment of the present invention only uses a period of a 52 multiframe as an example to limit combination manners of TFI values and data block numbers. In actual applications, other periods may be used.

This embodiment implements sharing of one or at least two TFIs by at least two terminals on a time division basis, thereby saving TFI resources of a GPRS system. A network side of the GPRS system may send, through a downlink data block/control block carrying a shared TFI, a message shared by the at least two terminals and a message of non-shared information of each terminal, and there is no need to separately send a data block or control block to each terminal repeatedly, so that transmission resources of a downlink channel in the GPRS system are saved.

### Example

Embodiment 5 distinguishes, by sharing on a time division basis, between downlink data blocks sent to different terminals, but this example distinguishes between different terminals by using a USF (Uplink State Flag, uplink state flag). The USF is an identity used to schedule uplink radio blocks, and is used in a downlink radio block to indicate that to which terminal a next uplink block is scheduled. The USF is assigned to a terminal in an uplink assignment message, has 8 bits in total, and may be used to identify at most 8 terminals.

| Bit | | | | | | | | |
|---|---|---|---|---|---|---|---|---|
| 8 | 7 | 6 | 5 | 4 | 3 | 2 | 1 | Octet |
| TFI | RRBP | | ES/P | | USF | | | 1 |
| BSN1 | | PR | | TFI (shared) | | | | 2 |
| BSN1 | | | | | | | | 3 |
| BSN2 | | | | | | | BSN1 | 4 |
| CPS | | | | | | BSN2 | | 5 |

As described in Embodiment 3 or 4, a network side notifies, in a downlink assignment message or a broadcast message, a terminal that a shared TFI is currently assigned to the terminal. After the terminal receives a data block or control block sent by the network side, the terminal parses the data block or control block; when a USF carried in the data block or control block is the same as a USF belonging to the terminal, and the data block or control block carries the shared TFI, the terminal considers that the data block or control block is sent to itself, and parses specific content of the data block or control block; otherwise, the terminal does not parse the data block or control block.

Of course, the network side may also set the USF to a special value (such as 111) to indicate that the downlink data block or the control block is shared by all terminals. The manner for notifying a special value is the same as that in Embodiment 4.

The downlink assignment message in the example of the present invention may also be other messages for assigning a TFI, such as a reconfiguration message. A block header of a downlink block uses MCS-9 as an example. Similar modifications may be made accordingly for other coding scheme.

An embodiment of the present invention provides a data transmission apparatus in a wireless communication system, where the apparatus is arranged on a network side and its specific structure is shown in FIG. 5, including the following modules:
a TFI assigning module 51, configured to assign a shared temporary block flow indication TFI to at least two terminals, and send the shared TFI to the at least two terminals; and
a downlink block transmitting module 52, configured to send a downlink block carrying the shared TFI to the at least two terminals, so that a terminal receiving the downlink block parses content of the downlink block according to the shared TFI.

The downlink block may be a downlink data block or a control block, where the control block may carry signaling.

The data transmission apparatus may further include:
a determining module 53, configured to determine, according to current usage of a downlink resource, user subscription information, and/or terminal capability information, whether to assign the shared TFI to the at least two terminals; where
the TFI assigning module is configured to assign the shared TFI to the at least two terminals when a determination result of the determining module is yes, and send a downlink assignment message or a broadcast message to the terminals, where the message carries the shared TFI assigned to the at least two terminals and the frequency and timeslot information of a downlink channel, where the broadcast message may include a system message.

In actual applications, the at least two terminals may be grouped. The network side needs to store a group identity belonging to each terminal, and the terminal side needs to store a group identity belonging to the terminal. Then the downlink assignment message or the broadcast message may further include a group identity corresponding to the shared TFI; or, a specified field or a new field in a block header of the downlink block sent by the network side to the terminal carries the group identity corresponding to the shared TFI. Therefore, the terminal receiving the downlink block determines, according to consistency between a specified group identity carried in the downlink block and the group identity belonging to the terminal, and the shared TFI carried in the downlink block, that the downlink block is sent to itself, and parses the content of the downlink block.

In actual applications, the network side may further respectively assign all downlink blocks in a certain period to terminals, and the network side needs to store a block number of a downlink block belonging to each terminal. Then the downlink assignment message or the broadcast message may further carry block number information of the downlink block belonging to each terminal, and the terminal side needs to store the block number of the downlink block belonging to the terminal. Therefore, the terminal receiving the downlink block determines, according to consistency between the block number information of the downlink block and the block number of the downlink block belonging to the terminal, and a shared TFI carried in the block header of the downlink block, that the downlink block is sent to itself, and parses content of the downlink block.

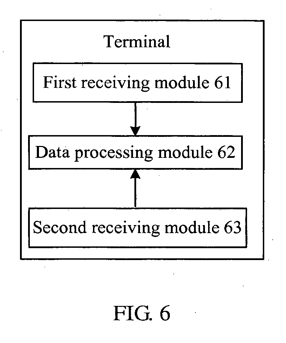

An embodiment of the present invention provides a terminal, the specific structure of which is shown in FIG. 6 and includes the following modules.

A first receiving module 61 is configured to receive a downlink assignment message or a broadcast message sent by a network side, where the downlink assignment message or the broadcast message includes an assigned shared temporary block flow indication TFI.

The network side determines, according to current usage of a downlink resource, user subscription information, and terminal capability information, whether to assign the shared TFI to at least two terminals, and if yes, the terminal receives the downlink assignment message or the broadcast message that is sent by the network side and carries the shared TFI assigned to the at least two terminals and the frequency and timeslot information of a downlink channel, where the broadcast message may include a system message.

A data processing module 62 is configured to receive a downlink block sent by the network side, where the downlink block carries the shared TFI, and parse content of the downlink block according to the shared TFI.

The data processing module 62 is specifically configured to monitor a downlink channel according to the frequency and timeslot information of the downlink channel that is carried in the downlink assignment message or the broadcast message, and after monitoring and receiving the downlink block sent by the network side, where the downlink block carries the shared TFI, parse a block header of the downlink block. When a TFI carried in the block header of the downlink block is the same as the shared TFI assigned to the terminal, the terminal considers that a data block is sent to itself, and parses specific content of the downlink block.

In actual applications, the at least two terminals may be grouped, and the terminal side needs to store a group identity belonging to the terminal. Then the downlink assignment message or the broadcast message may further include a group identity corresponding to the shared TFI; or, a specified field or a new field in the block header of the downlink block sent by the network side to the terminal may further carry the group identity corresponding to the shared TFI.

The data processing module 62 is specifically configured to determine, according to consistency between the group identity corresponding to the shared TFI and the group identity belonging to the terminal, and consistency between the TFI carried in the block header of the downlink block and the shared TFI assigned to the terminal, that the downlink block is sent to itself, and parse specific content of the downlink block.

In actual applications, the network side may further respectively assign all downlink blocks in a certain period to terminals. Then the downlink assignment message or the broadcast message may further carry block number information of a downlink block belonging to each terminal, and the terminal side needs to store a block number of a downlink block belonging to the terminal.

The data processing module 62 is specifically configured to determine, according to consistency between the block number information of the downlink block and the block number information of the downlink block belonging to the terminal, and consistency between the TFI carried in the block header of the downlink block and the shared TFI assigned to the terminal, that the downlink block is sent to itself, and parse specific content of the downlink block.

In actual applications, the network side may respectively assign all downlink blocks in a certain period to terminals, and the terminal receives an uplink assignment message or a broadcast message sent by the network side, where the message carries an uplink USF (link state flag) assigned to the terminal.

The terminal further includes a second receiving module 63, configured to receive an uplink assignment message sent by the network side, where the message carries an uplink state flag USF assigned to the terminal.

The data processing module is specifically configured to determine, according to consistency between a USF carried in the downlink block and the USF belonging to the terminal, and the shared TFI carried in the downlink block, that the downlink block is sent to the terminal, and parse content of the downlink block.

Persons of ordinary skill in the art may understand that all or a part of processes in the methods of the above embodiments may be implemented by a computer program instructing relevant hardware. The computer program may be stored in a computer readable storage medium. When the program is run, the processes of the methods in the embodiments are performed. The storage medium may be a magnetic disk, an optical disk, a read-only memory (Read-Only Memory, ROM), a random access memory (Random Access Memory, RAM), or the like.

To conclude, in the embodiments of the present invention, by sharing a TFI, the number of terminals that can be multiplexed on a downlink packet radio channel is increased, downlink transmission resources are saved, and utilization of radio resources is improved.

In the embodiments of the present invention, a shared TFI is assigned to at least two terminals, so that TFI resources in a GPRS system are saved. A network side of the GPRS system may send, through a downlink data block or a control block carrying the shared TFI, a downlink data/control message shared by the at least two terminals, and there is no need to separately send a data block to each terminal repeatedly, so that transmission resources of a downlink channel in the GPRS system are saved.

The shared TFI may be directly assigned, reserved, or shared on a time division basis; in addition, at least two terminals may be grouped, and terminals in different groups share a same TFI, which may implement a more flexible manner for sharing TFI resources.

In the embodiments of the present invention, a message shared by at least two terminals and a message of non-shared information of each terminal may be sent through a downlink data block or a control block carrying a shared TFI, so that transmission resources of a downlink channel in the GPRS system are further saved.

The above descriptions are merely exemplary implementation manners of the present invention, but the protection scope of the present invention is not limited thereto. Any modification or replacement that can be easily thought of by persons skilled in the art without departing from the technical scope of the present invention shall fall within the protection scope of the present invention. Therefore, the protection scope of the present invention is subject to the protection scope of the appended claims.

## Claims

1. A data transmission method, **characterized by** comprising:
assigning (21), by a network side, a shared temporary block flow indication, TFI, to at least two terminals, and sending the shared TFI through a downlink assignment message or a broadcast message to the at least two terminals, wherein the downlink assignment message or the broadcast message further comprises identity information of a downlink block belonging to each terminal; and
sending (22), by the network side, a downlink block to the at least two terminals, wherein a block header of the downlink block carries the shared TFI wherein a terminal receiving the downlink block parses content of the downlink block according to identity information of the downlink block sent by the network side, identity information of a downlink block belonging to the terminal, and the shared TFI carried in the block header of the downlink block.

2. The data transmission method according to claim 1, wherein the assigning, by a network side, a shared temporary block flow indication, TFI, to at least two terminals, and sending the shared TFI through a downlink assignment message or a broadcast message to the at least two terminals comprise:
determining, by the network side, according to at least one of usage of a downlink resource, user subscription information, and terminal capability information, whether to assign the shared TFI to the at least two terminals, and if yes, sending the downlink assignment message or the broadcast message to the terminals, wherein the message carries the shared TFI assigned to the at least two terminals.

3. A data transmission apparatus arranged on a network side, **characterized by** comprising:
a temporary block flow indication, TFI, assigning module (51), configured to assign a shared TFI to at least two terminals, and send the shared TFI through a downlink assignment message or a broadcast message to the at least two terminals, wherein the downlink assignment message or the broadcast message further comprises identity information of a downlink block belonging to each terminal; and
a downlink block transmitting module (52), configured to send a downlink block to the at least two terminals, wherein a block header of the downlink block carries the shared TFI wherein a terminal receiving the downlink block parses content of the downlink block according to identity information of the downlink block sent by the network side, identity information of a downlink block belonging to the terminal, and the shared TFI carried in the block header of the downlink block.

4. The data transmission apparatus according to claim 3, wherein the network side further comprising:
a determining module (53), configured to determine, according to at least one of current usage of a downlink resource, user subscription information, and terminal capability information, whether to assign the shared TFI to the at least two terminals;
wherein the TFI assigning module is configured to assign the shared TFI to the at least two terminals when a determination result of the determining module is yes, and send the downlink assignment message or the broadcast message to the terminals, wherein the message carries the shared TFI assigned to the at least two terminals.

5. A data processing method, **characterized by** comprising:
receiving (31), by a terminal, a downlink assignment message or a broadcast message sent by a network side, wherein the downlink assignment message or the broadcast message comprises an assigned shared temporary block flow indication, TFI, which is assigned to at least two terminals and identity information of a downlink block belonging to the terminal; and
receiving (32), by the terminal, a downlink block sent by the network side, wherein the downlink block carries the shared TFI, and parsing content of the downlink block according to identity information of the downlink block sent by the network side, identity information of a downlink block belonging to the terminal, and the shared TFI carried in the downlink block.

6. A terminal, **characterized by** comprising:
a first receiving module (61), configured to receive a downlink assignment message or a broadcast message sent by a network side, wherein the downlink assignment message or the broadcast message comprises an assigned shared temporary block flow indication, TFI, which is assigned to at least two terminals and identity information of a downlink block belonging to the terminal; and
a data processing module (62), configured to receive a downlink block sent by the network side, wherein the downlink block carries the shared TFI, and parse content of the downlink block according to identity information of the downlink block sent by the network side, identity information of a downlink block belonging to the terminal, and the shared TFI carried in the downlink block.

## Patentansprüche

1. Datenübertragungsverfahren, **dadurch gekennzeichnet, dass** es Folgendes umfasst:
Zuweisen (21), durch eine Netzseite, einer gemeinsam verwendeten temporären Blockablaufangabe, TFI, zu wenigstens zwei Endgeräten und Senden der gemeinsam verwendeten TFI durch eine Abwärtsstreckenzuweisungsnachricht oder eine Rundsendenachricht zu den wenigstens zwei Endgeräten, wobei die Abwärtsstreckenzuweisungsnachricht oder die Rundsendenachricht ferner Identitätsinformationen eines Abwärtsstreckenblocks, die zu jedem Endgerät gehören, umfasst; und
Senden (22), durch die Netzseite, eines Abwärtsstreckenblocks zu den wenigstens zwei Endgeräten, wobei ein Blockkopf des Abwärtsstreckenblocks die gemeinsam verwendete TFI führt, wobei ein Endgerät, das den Abwärtsstreckenblock empfängt, den Inhalt des Abwärtsstreckenblocks gemäß den Identitätsinformationen des Abwärtsstreckenblocks, die durch die Netzseite gesendet werden, den Identitätsinformationen eines Abwärtsstreckenblocks, die zu dem Endgerät gehören, und der gemeinsam verwendeten TFI, die in dem Blockkopf des Abwärtsstreckenblocks geführt ist, analysiert.

2. Datenübertragungsverfahren nach Anspruch 1, wobei das Zuweisen, durch eine Netzseite, einer gemeinsam verwendeten temporären Blockablaufangabe, TFI, zu wenigstens zwei Endgeräten und Senden der gemeinsam verwendeten TFI durch eine Abwärtsstreckenzuweisungsnachricht oder eine Rundsendenachricht zu den wenigstens zwei Endgeräten Folgendes umfasst:
Bestimmen, durch die Netzseite, gemäß der Nutzung eines Abwärtsstreckenbetriebsmittels und/oder Anwenderabonnementinformationen und/oder Endgerätefähigkeitsinformationen, ob die gemeinsam verwendete TFI den wenigstens zwei Endgeräten zugewiesen werden soll, und falls ja, Senden der Abwärtsstreckenzuweisungsnachricht oder der Rundsendenachricht zu den Endgeräten, wobei die Nachricht die gemeinsam verwendete TFI, die den wenigstens zwei Endgeräten zugewiesen ist, führt.

3. Datenübertragungsvoruchtung, die auf einer Netzseite angeordnet ist, **dadurch gekennzeichnet, dass** sie Folgendes umfasst:
Zuweisungsmodul für eine temporäre Blockablaufangabe, TFI-Zuweisungsmodul, (51), das konfiguriert ist, eine gemeinsam verwendete TFI wenigstens zwei Endgeräten zuzuweisen und die gemeinsam verwendete TFI durch eine Abwärtsstreckenzuweisungsnachricht oder eine Rundsendenachricht zu den wenigstens zwei Endgeräten zu senden, wobei die Abwärtsstreckenzuweisungsnachricht oder die Rundsendenachricht ferner Identitätsinformationen eines Abwärtsstreckenblocks, die zu jedem Endgerät gehören, umfasst; und
ein Abwärtsstreckenblockübertragungsmodul (52), das konfiguriert ist, einen Abwärtsstreckenblock zu den wenigstens zwei Endgeräten zu senden, wobei ein Blockkopf des Abwärtsstreckenblocks die gemeinsam verwendete TFI führt, wobei ein Endgerät, das den Abwärtsstreckenblock empfängt, den Inhalt des Abwärtsstreckenblocks gemäß den Identitätsinformationen des Abwärtsstreckenblocks, die durch die Netzseite gesendet werden, den Identitätsinformationen eines Abwärtsstreckenblocks, die zu dem Endgerät gehören, und der gemeinsam verwendeten TFI, die in dem Blockkopf des Abwärtsstreckenblocks geführt ist, analysiert.

4. Datenübertragungsvoruchtung nach Anspruch 3, wobei die Netzseite ferner Folgendes umfasst:
ein Bestimmungsmodul (53), das konfiguriert ist, gemäß der aktuellen Nutzung eines Abwärtsstreckenbetriebsmittels und/oder Anwenderabonnementinformationen und/oder Endgerätefähigkeitsinformationen zu bestimmen, ob die gemeinsam verwendete TFI den wenigstens zwei Endgeräten zugewiesen werden soll;
wobei das TFI-Zuweisungsmodul konfiguriert ist, die gemeinsam verwendete TFI den wenigstens zwei Endgeräten zuzuweisen, wenn ein Bestimmungsergebnis des Bestimmungsmoduls ja ist, und die Abwärtsstreckenzuweisungsnachricht oder die Rundsendenachricht zu den Endgeräten zu senden, wobei die Nachricht die gemeinsam verwendete TFI, die den wenigstens zwei Endgeräten zugewiesen ist, führt.

5. Datenverarbeitungsverfahren, **dadurch gekennzeichnet, dass** es Folgendes umfasst:
Empfangen (31), durch ein Endgerät, einer Abwärtsstreckenzuweisungsnachricht oder einer Rundsendenachricht, die durch eine Netzseite gesendet wird, wobei die Abwärtsstreckenzuweisungsnachricht oder die Rundsendenachricht eine zugewiesene gemeinsam verwendete temporäre Blockablaufangabe, TFI, die den wenigstens zwei Endgeräten zugewiesen ist, und Identitätsinformationen eines Abwärtsstreckenblocks, der zu dem Endgerät gehört, umfasst; und
Empfangen (32), durch das Endgerät, eines Abwärtsstreckenblocks, der durch die Netzseite gesendet wird, wobei der Abwärtsstreckenblock die gemeinsam verwendete TFI führt, und Analysieren von Inhalt des Abwärtsstreckenblocks gemäß den Identitätsinformationen des Abwärtsstreckenblocks, die durch die Netzseite gesendet werden, Identitätsinformationen eines Abwärtsstreckenblocks, die zu dem Endgerät gehören, und der gemeinsam verwendeten TFI, die in dem Abwärtsstreckenblock geführt ist.

6. Endgerät, **dadurch gekennzeichnet, dass** es Folgendes umfasst:
ein erstes Empfangsmodul (61), das konfiguriert ist, eine Abwärtsstreckenzuweisungsnachricht oder einer Rundsendenachricht, die durch eine Netzseite gesendet wird, zu empfangen, wobei die Abwärtsstreckenzuweisungsnachricht oder die Rundsendenachricht eine zugewiesene gemeinsam verwendete temporäre Blockablaufangabe, TFI, die den wenigstens zwei Endgeräten zugewiesen ist, und Identitätsinformationen eines Abwärtsstreckenblocks, die zu dem Endgerät gehören, umfasst; und
ein Datenverarbeitungsmodul (62), das konfiguriert ist, einen Abwärtsstreckenblock, der durch die Netzseite gesendet wird, zu empfangen, wobei der Abwärtsstreckenblock die gemeinsam verwendete TFI führt, und Inhalt des Abwärtsstreckenblocks gemäß den Identitätsinformationen des Abwärtsstreckenblocks, die durch die Netzseite gesendet werden, Identitätsinformationen eines Abwärtsstreckenblocks, die zu dem Endgerät gehören, und der gemeinsam verwendeten TFI, die in dem Abwärtsstreckenblock geführt ist, zu analysieren.

## Revendications

1. Procédé de transmission de données, **caractérisé en ce qu'**il comprend les étapes consistant à :
attribuer (21), par un côté réseau, une indication de flux de bloc temporaire, TFI, partagée à au moins deux terminaux, et envoyer la TFI partagée aux au moins deux terminaux par le biais d'un message d'attribution de liaison descendante ou d'un message à diffusion large, le message d'attribution de liaison descendante ou le message à diffusion large comprenant en outre des informations d'identité d'un bloc de liaison descendante appartenant à chaque terminal ; et
envoyer (22), par le côté réseau, un bloc de liaison descendante aux au moins deux terminaux, un en-tête de bloc du bloc de liaison descendante contenant la TFI partagée, un terminal recevant le bloc de liaison descendante procédant à une analyse syntaxique du contenu du bloc de liaison descendante en fonction d'informations d'identité du bloc de liaison descendante envoyé par le côté réseau, d'informations d'identité d'un bloc de liaison descendante appartenant au terminal et de la TFI partagée contenue dans l'en-tête de bloc du bloc de liaison descendante.

2. Procédé de transmission de données selon la revendication 1, dans lequel l'étape consistant à attribuer, par un côté réseau, une indication de flux de bloc temporaire, TFI, partagée à au moins deux terminaux, et envoyer la TFI partagée aux au moins deux terminaux par le biais d'un message d'attribution de liaison descendante ou d'un message à diffusion large comprend l'étape consistant à :
déterminer, par le côté réseau, en fonction de l'utilisation d'une ressource de liaison descendante et/ou d'informations d'abonnement d'utilisateur et/ou d'informations de capacité de terminal, s'il convient d'attribuer la TFI partagée aux au moins deux terminaux et, dans l'affirmative, envoyer le message d'attribution de liaison descendante ou le message à diffusion large aux terminaux, le message contenant la TFI partagée attribuée aux au moins deux terminaux.

3. Appareil de transmission de données agencé d'un côté réseau, **caractérisé en ce qu'**il comprend :
un module d'attribution d'indication de flux de bloc temporaire, TFI, (51), configuré pour attribuer une TFI partagée à au moins deux terminaux, et envoyer la TFI partagée aux au moins deux terminaux par le biais d'un message d'attribution de liaison descendante ou d'un message à diffusion large, le message d'attribution de liaison descendante ou le message à diffusion large comprenant en outre des informations d'identité d'un bloc de liaison descendante appartenant à chaque terminal ; et
un module de transmission de bloc de liaison descendante (52), configuré pour envoyer un bloc de liaison descendante aux au moins deux terminaux, un en-tête de bloc du bloc de liaison descendante contenant la TFI partagée, un terminal recevant le bloc de liaison descendante procédant à une analyse syntaxique du contenu du bloc de liaison descendante en fonction d'informations d'identité du bloc de liaison descendante envoyé par le côté réseau, d'informations d'identité d'un bloc de liaison descendante appartenant au terminal et de la TFI partagée contenue dans l'en-tête de bloc du bloc de liaison descendante.

4. Appareil de transmission de données selon la revendication 3, dans lequel le côté réseau comprend en outre :
un module de détermination (53), configuré pour déterminer, en fonction de l'utilisation actuelle d'une ressource de liaison descendante et/ou d'informations d'abonnement d'utilisateur et/ou d'informations de capacité de terminal, s'il convient d'attribuer la TFI partagée aux au moins deux terminaux ;
dans lequel le module d'attribution de TFI est configuré pour attribuer la TFI partagée aux au moins deux terminaux en cas de résultat de détermination affirmatif du module de détermination, et envoyer le message d'attribution de liaison descendante ou le message à diffusion large aux terminaux, le message contenant la TFI partagée attribuée aux au moins deux terminaux.

5. Procédé de traitement de données, **caractérisé en ce qu'**il comprend les étapes consistant à :
recevoir (31), par un terminal, un message d'attribution de liaison descendante ou un message à diffusion large envoyé par un côté réseau, le message d'attribution de liaison descendante ou le message à diffusion large comprenant une indication de flux de bloc temporaire, TFI, partagée attribuée qui est attribuée à au moins deux terminaux et des informations d'identité d'un bloc de liaison descendante appartenant au terminal ; et
recevoir (32), par le terminal, un bloc de liaison descendante envoyé par le côté réseau, le bloc de liaison descendante contenant la TFI partagée, et procéder à une analyse syntaxique du contenu du bloc de liaison descendante en fonction d'informations d'identité du bloc de liaison descendante envoyé par le côté réseau, d'informations d'identité d'un bloc de liaison descendante appartenant au terminal et de la TFI partagée contenue dans le bloc de liaison descendante.

6. Terminal, **caractérisé en ce qu'**il comprend :
un premier module de réception (61), configuré pour recevoir un message d'attribution de liaison descendante ou un message à diffusion large envoyé par un côté réseau, le message d'attribution de liaison descendante ou le message à diffusion large comprenant une indication de flux de bloc temporaire, TFI, partagée attribuée qui est attribuée à au moins deux terminaux et des informations d'identité d'un bloc de liaison descendante appartenant au terminal ; et
un module de traitement de données (62), configuré pour recevoir un bloc de liaison descendante envoyé par le côté réseau, le bloc de liaison descendante contenant la TFI partagée, et procéder à une analyse syntaxique du contenu du bloc de liaison descendante en fonction d'informations d'identité du bloc de liaison descendante envoyé par le côté réseau, d'informations d'identité d'un bloc de liaison descendante appartenant au terminal et de la TFI partagée contenue dans le bloc de liaison descendante.
